# FASCICULE DE BREVET EUROPEEN

(11) **EP 1 523 264 B1**
(45) Date de publication et mention de la délivrance du brevet: **16.11.2005**
(21) Numéro de dépôt: 03748212.2
(22) Date de dépôt: 16.07.2003
(51) Int. Cl.: A47J 45/10

(54) **DISPOSITIF AMOVIBLE DE PREHENSION SANS CHANGEMENT DE PRISE DE MAIN**
ABNEHMBARE VORRICHTUNG ZUM GREIFEN OHNE ÄNDERUNG DER GREIFWEISE
REMOVABLE GRIPPING DEVICE WHICH DOES NOT REQUIRE THE USER TO ALTER HIS/HER GRIP THEREON

(30) Priorité: 24.07.2002 FR 0209383
(43) Date de publication de la demande: 20.04.2005
(73) Titulaire: SEB SA, 69130 Ecully (FR)
(72) Inventeur: LORTHIOIR, Christophe, F-73410 Albens (FR); MONTGELARD, Michel, Résidence d'Aléry, F-74960 Cran Gevrier (FR)
(74) Mandataire: Pichat, Thierry
(86) Numéro de dépôt international: PCT/FR2003/002249
(87) Numéro de publication internationale: WO 2004/010831

(56) Documents cités:
- FR-A- 2 739 772
- FR-A- 2 768 914
- US-B1- 6 318 776
- PATENT ABSTRACTS OF JAPAN vol. 2002, no. 05, 3 mai 2002 (2002-05-03) & JP 2002 017581 A (CHO HITSUI), 22 janvier 2002 (2002-01-22)

## Description

La présente invention concerne un dispositif de préhension amovible pour récipient, notamment un manche amovible pour casserole et évitant le changement de prise de mains.

On connaît un dispositif de préhension amovible pour récipient, du type comprenant deux organes formant pince montés sur un corps de préhension, l'un des organes formant pince étant mobile en translation par rapport au corps de préhension, selon une direction sensiblement parallèle à la direction longitudinale du corps de préhension, entre une position ouverte et une position fermée dans laquelle les organes formant pince sont adaptés à pincer un rebord du récipient, le dispositif de préhension amovible comprenant des moyens de déplacement adaptés à déplacer les organes formant pince l'un par rapport à l'autre, comportant un levier monté mobile en rotation par rapport au corps de préhension entre une position déployée et une positon escamotée dans laquelle l'organe mobile formant pince est en position fermée, et un moyen de transmission s'étendant entre le levier et l'organe mobile formant pince adapté à déplacer l'organe mobile formant pince en translation quand le levier est pivoté, le dispositif de préhension amovible comprenant des moyens d'actionnement du déploiement du levier.

De tels dispositifs amovible de préhension sont décrits dans les demandes de brevet FR 2 739 772 et FR 2 768 914, et dans le document JP-2002 017561.

Cependant, quand l'utilisateur veut libérer le récipient d'un dispositif de préhension amovible de l'art antérieur, il doit changer sa prise en main : la rotation du levier vers sa position déployée, causée par l'activation des moyens d'actionnement, est gênée par la présence de doigts ou de la paume de la main, cette présence étant nécessaire pour imposer au corps de préhension une contre pression permettant l'activation des moyen d'actionnement par une pression exercée par le pouce et dirigée selon une direction sensiblement normale à la direction longitudinale du corps de préhension.

Le problème posé est de réaliser un dispositif de préhension amovible dont les moyens d'actionnement sont agencés de telle sorte que l'utilisateur peut les manoeuvrer et faire passer le levier de sa position escamotée à sa position déployée sans avoir à changer de prise de main, ce qui lui assure une plus grande facilité d'utilisation.

La solution proposée à ce problème est un dispositif de préhension du type précité comprenant les caractéristiques techniques exposées dans la partie caractérisante de la revendication 1.

Comme les moyens d'actionnement sont mobiles selon une direction sensiblement parallèle à la direction longitudinale du corps de préhension, aucune contre pression est nécessaire et l'utilisateur peut libérer le levier tout en conservant une prise en main minimale suffisante pour soutenir le corps de préhension.

Selon un mode de réalisation particulier, les moyens d'actionnement en position de repos sont plus proches des organes formant pince qu'en position d'actionnement.

Par cet agencement, pour manoeuvrer les moyens d'actionnement, l'utilisateur doit éloigner les moyens d'actionnement des organes formant pince en pliant le pouce. Cette manoeuvre étant moins naturelle que celle de pousser les moyens d'actionnement et de les rapprocher des organes formant pince, les risques d'actionnement du déploiement du levier par inadvertance sont donc considérablement réduits.

Selon un autre mode de réalisation particulier, les moyens d'actionnement en position de repos sont adaptés à verrouiller le levier en position escamotée.

De cette façon, le verrouillage du levier dans sa position escamotée empêche l'ouverture des organes formant pince, même si l'utilisateur manipule brusquement le dispositif de préhension, et ceci même si, quand les organes formant pince sont en position fermée, les moyens de déplacement sont proches de la position d'équilibre à partir de laquelle les organes formant pince sont entraînés vers leur position ouverte.

Selon un autre mode de réalisation particulier, le dispositif de préhension comprend un arbre autour duquel sont articulés le levier et le moyen de transmission, qui est situé à proximité de l'extrémité du levier opposée à celle par laquelle le levier est relié au corps de préhension, et qui est mobile en translation dans une fente réalisée dans le moyen de transmission à proximité de l'extrémité du moyen de transmission opposée à celle par laquelle le moyen de transmission est relié à l'organe mobile formant pince.

Par cet agencement particulier des moyens de déplacement, le dispositif de préhension peut pincer de façon sûre des rebords de récipient dont l'épaisseur peut varier selon une plage relativement importante, entre 0,5 et 3,5 mm (ce qui correspond sensiblement à l'amplitude de mouvement de l'arbre dans la fente).

Selon un autre mode de réalisation, le levier et le moyen de transmission sont de longueur réduite, ce qui permet à l'utilisateur d'avoir toujours une emprise sur le corps de préhension par son annulaire et son auriculaire, seuls l'index et le majeur étant disposés au niveau du levier, et ce qui diminue l'amplitude du mouvement du levier.

Selon un autre agencement particulier un ressort à boudin, logé dans le moyen de transmission, est utilisé comme moyen élastique du mécanisme à genouillère. De ce fait, contrairement aux dispositifs de préhension de l'art antérieur comprenant un ressort à lame formant bielle, il n'y a pas de risque de détérioration quand le rebord du récipient pincé est de forte épaisseur.

La faible amplitude du mouvement du levier permet de munir le levier et le moyen de transmission de parois verticales agencées de sorte que, même quand le levier est en position déployée, l'ensemble du mécanisme est masqué et protégé de tout encrassement.

D'autres particularités de l'invention résulteront de la description détaillée qui va suivre.

Aux dessins annexés à titre d'exemple non limitatif :
- La figure 1 est une vue éclatée en perspective d'un dispositif de préhension amovible conforme à la présente invention ;
- La figure 2 est une vue en coupe longitudinale d'un dispositif de préhension amovible, les organes formant pince étant en position fermée ; et
- La figure 3 est une vue en coupe longitudinale d'un dispositif de préhension amovible, les organes formant pince étant en position ouverte.

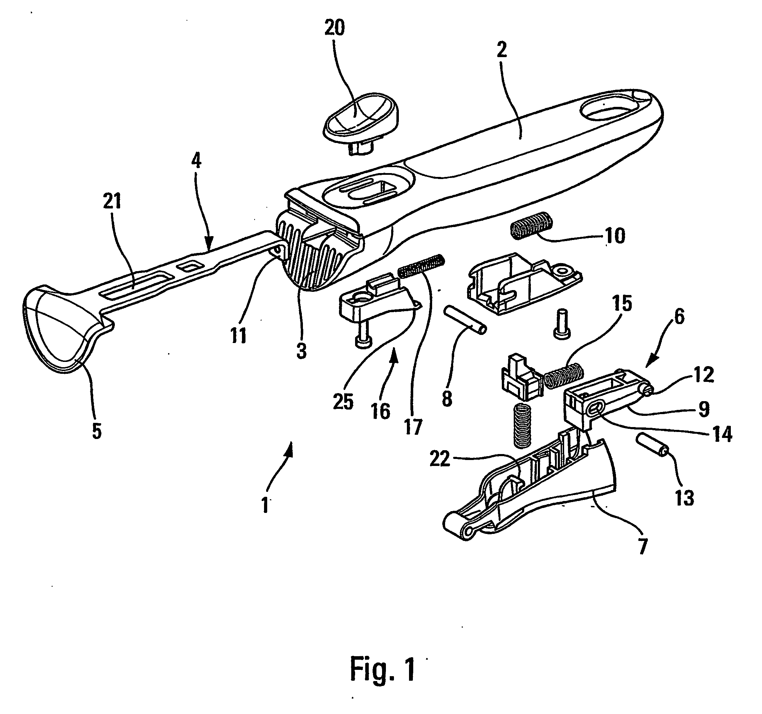

Comme on peut le voir à la figure 1, un dispositif de préhension amovible 1 pour récipient (par exemple un manche amovible pour une casserole) comprend un corps de préhension 2 sur lequel sont montés deux organes formant pince 3,4.

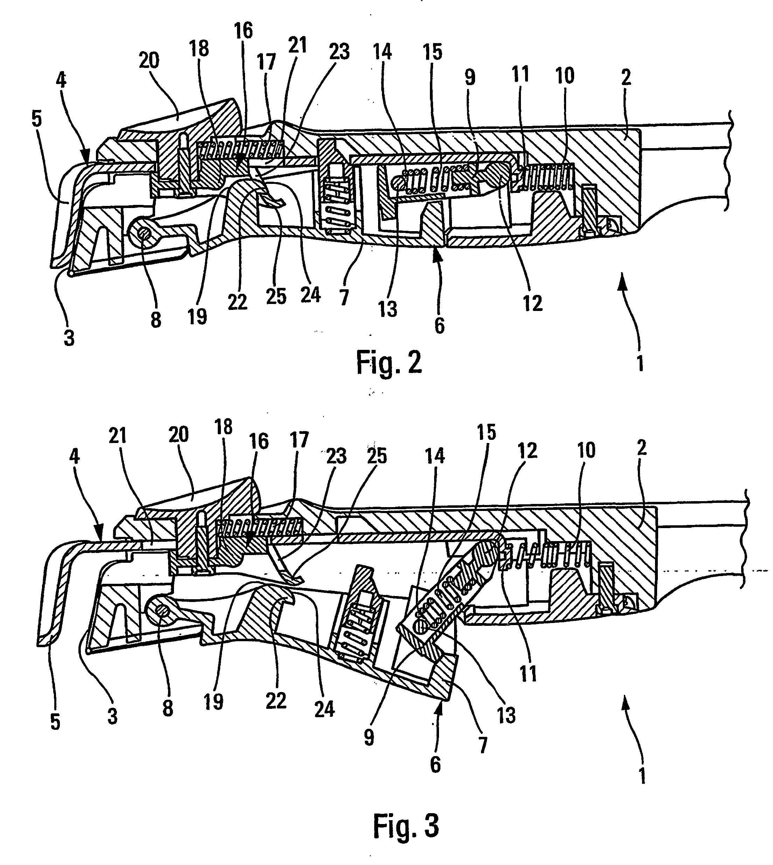

Un premier organe formant pince 3 est fixé à une extrémité du corps de préhension 2, et le second organe formant pince 4 est monté mobile en translation par rapport au corps de préhension 2, entre une position ouverte (figure 3) et une position fermée (figure 2).

L'organe mobile formant pince 4 comprend une extrémité de serrage 5 qui est adaptée, avec l'organe fixe formant pince 3, à pincer un rebord du récipient quand l'organe mobile formant pince 4 est en position fermée.

Dans le présent mode de réalisation, l'organe fixe formant pince 3 et l'extrémité de serrage 5 de l'organe mobile formant pince 4 sont conformées de façon à pouvoir pincer des récipients dont l'extrémité supérieure du rebord est incurvée vers l'extérieur et forme ainsi une courte collerette courbe.

Un ressort d'ouverture 10 prend appui contre le corps de préhension 2 et contre une extrémité d'appui 11 de l'organe mobile formant pince 4, opposée à l'extrémité de serrage 5, et sollicite en permanence l'organe mobile formant pince 4 vers sa position ouverte.

Le dispositif de préhension amovible 1 comprend des moyens de déplacement 6 qui sont adaptés à déplacer l'organe mobile formant pince 4 par rapport au corps de préhension 2.

Ces moyens de déplacement 6 comprennent un levier 7 qui est monté mobile en rotation autour d'un axe de rotation 8 par rapport au corps de préhension 2 entre une position déployée (figure 3) et une positon escamotée (figure 2). L'axe de rotation 8 est normal à la direction longitudinale du corps de préhension 2 et est situé à proximité de l'organe fixe formant pince 3 et à proximité d'une première extrémité du levier 7.

Dans le présent exemple, quand le levier 7 est dans sa position escamotée, il est complètement située dans le corps de préhension 2 de façon à ne pas pouvoir être manoeuvré par l'utilisateur.

Quand le levier 7 est en position déployée, l'organe mobile formant pince 4 est en position ouverte, et quand il est en position escamotée, l'organe mobile formant pince 4 est en position fermée.

Les moyens de déplacement 6 comprennent aussi un moyen de transmission 9 qui s'étend entre le levier 7 et l'organe mobile formant pince 4 et qui est adapté à déplacer l'organe mobile formant pince 4 en translation quand le levier 7 est pivoté.

Dans l'exemple illustré aux figures 1 à 3, le moyen de transmission 9 est une bielle 9, et les moyens de déplacement 6 sont agencés selon une relation en genouillère : les moyens de déplacement 6 sont conformés de sorte que, le levier 7 est dans une position d'équilibre stable quand il est en position déployée et quand il est en position escamotée, et il passe par une position d'équilibre instable (définie par la droite d'équilibre des moyens de déplacement 6) quand il passe de l'une à l'autre de ses deux positions d'équilibre stable.

Par rapport à l'organe mobile formant pince 4, la bielle 9 est mobile en rotation autour d'un axe de pivotement 12 qui est adjacent à l'extrémité d'appui 11 de l'organe mobile formant pince 4 et à une première extrémité de la bielle 9.

Par rapport au levier 7, la bielle 9 est mobile en rotation autour d'un arbre 13. Afin de permettre la relation en genouillère, l'arbre 13 est monté mobile en translation dans une fente 14 qui est réalisée dans la bielle 9 et qui s'étend dans la direction longitudinale de celle-ci. L'arbre 13 est mobile entre une position d'équilibre instable dans laquelle l'arbre 13 est situé sur la droite d'équilibre du mécanisme à genouillère qui est définie par l'axe de rotation 8 et l'axe de pivotement 12 et une position d'équilibre stable dans laquelle le levier 7 est soit dans sa position déployée (l'arbre 13 étant situé du côté dit d'ouverture de la droite d'équilibre), soit dans sa position escamotée (l'arbre 13 étant situé du côte dit de fermeture de la droite d'équilibre).

Un ressort de genouillère 15 sollicite en permanence l'arbre 13 en direction de sa position d'équilibre stable.

Quand l'arbre 13 est situé du côté d'ouverture de la droite d'équilibre, le ressort d'ouverture 10 sollicite, d'une part, l'organe mobile formant pince 4 vers sa position ouverte et, d'autre part, le levier 7 vers sa position déployée par l'intermédiaire de la bielle 9.

Quand l'arbre 13 est situé du côté de fermeture de la droite d'équilibre, le ressort d'ouverture 10 sollicite le levier 7 vers sa position escamotée et plaque, d'une part, le levier 7 contre le corps de préhension 2, et, d'autre part, la bielle 9 contre l'organe mobile formant pince 4, le ressort de genouillère 15 se trouvant orienté selon une direction très proche de celle du ressort d'ouverture 10. De ce fait, le ressort de genouillère 15 qui sollicite l'arbre 13 en direction de sa position d'équilibre, impose à l'organe mobile formant pince 4 une translation vers sa position fermée, malgré la présence du ressort d'ouverture 10.

Quand un utilisateur veut pincer le rebord d'un récipient, il positionne le rebord entre l'organe fixe formant pince 3 et l'extrémité de serrage 5 de l'organe mobile formant pince 4 en position ouvert, et il fait pivoter le levier 7 de sa position déployée vers sa position escamotée. La rotation du levier 7 entraîne la rotation de la bielle 9 et la translation de l'organe mobile formant pince 4, l'arbre 13 franchissant alors la droite d'équilibre du mécanisme à genouillère, ce qui permet de réaliser un pincement stable du rebord du récipient.

La mobilité de l'arbre 13 dans la fente 14 permet d'ajuster la distance séparant l'extrémité de serrage 5 de l'organe mobile formant pince 4 en position fermée et l'organe fixe formant pince 3 à l'épaisseur du rebord du récipient.

La plage des distances séparant l'extrémité de serrage 5 de l'organe mobile formant pince 4 en position fermée et l'organe fixe formant pince 3 est sensiblement inférieure à l'amplitude de mouvement de l'arbre 13 dans la fente 14 de façon à permettre à l'arbre 13 de passer la droite d'équilibre et à avoir un pincement stable.

Selon le mode de réalisation illustré aux figures 1 à 3, l'arbre 13 est situé à proximité de la deuxième extrémité du levier 7 qui est opposée à la première extrémité proche de l'axe de rotation 8. La fente 14 est réalisée à proximité de la deuxième extrémité de la bielle 9 qui est opposée à la première extrémité proche de l'axe de pivotement 12, l'arbre 13 étant sollicité par le ressort de genouillère 15 vers l'extrémité longitudinale de la fente 14 qui est la plus proche de la deuxième extrémité de la bielle 9.

Par cet agencement particulier des moyens de déplacement 6, le dispositif de préhension 1 peut pincer de façon sûre des rebords de récipient dont l'épaisseur peut varier selon une plage relativement importante (entre 0,5 et 3,5 mm)

De plus, l'utilisation d'un ressort à boudin logé dans la bielle 9 comme ressort de genouillère 15 permet d'éviter tout risque de détérioration du mécanisme à genouillère, bien que la plage des épaisseurs du rebord de récipient pouvant être pincé soit importante.

Par ailleurs, afin de faciliter la prise en main du dispositif de préhension 1, même quand le levier 7 est en position déployée, le levier 7 a une longueur réduite telle que qu'un utilisateur qui a en main le dispositif de préhension 1, a son index et son majeur disposés contre le levier 7 et son annulaire et son auriculaire disposés contre le corps de préhension. De ce fait, l'utilisateur peut libérer le levier 7 de l'emprise réalisée par l'index et le majeur tout en conservant l'annulaire et l'auriculaire pour maintenir le corps de préhension 2. De façon typique, la longueur du levier correspond à la largeur de trois doigts serrés les uns contre les autres (ou environ 7 cm à partir de l'axe de rotation 8, ou encore, environ 6 cm pour la partie du levier pivotant hors du corps de préhension 2.

En outre, l'utilisation d'une bielle 9 de longueur réduite permet d'avoir un levier 7 ayant une faible amplitude de mouvement, rendant encore plus aisée la prise en main du dispositif de préhension 1, même quand le levier 7 est en position déployée.

Ainsi, l'utilisateur n'a pas à changer de prise en main quand le levier 7 passe de sa position déployée vers sa position escamotée, et inversement.

Avantageusement, le levier 7 et la bielle 9 comprennent des parois verticales agencées de sorte que, même quand le levier 7 est en position déployée, l'ensemble du mécanisme est masqué et protégé de tout encrassement.

Selon la présente invention, le dispositif de préhension amovible 1 comporte des moyens d'actionnement 16 distincts des moyens de déplacement 6 et montés de façon mobile en translation sur le corps de préhension 2 selon une direction sensiblement parallèle à la direction longitudinale du corps de préhension 2.

Les moyens d'actionnement 16 sont mobiles entre une position de repos et une position d'actionnement dans laquelle les moyens d'actionnement 16 font passer le levier 7 de sa position escamotée à sa position déployée.

Les moyens d'actionnement 16 sont sollicités en permanence vers leur position de repos par tout moyen de rappel tel qu'un ressort de rappel 17 prenant appui contre le corps de préhension 2 et les moyens d'actionnement 16.

Quand ils sont en position de repos, les moyens d'actionnement 16 sont adaptés à laisser le levier 7 dans sa position stable escamotée (et donc les organes formant pince 3,4 en position fermée), et quand ils passent de leur position de repos à leur position d'actionnement, les moyens d'actionnement 16 sont adaptés à venir en butée contre le levier 7 et à le faire pivoter jusqu'à ce qu'il franchisse sa position d'équilibre instable.

Comme on peut le voir aux figures 2 et 3, le levier 7 comprend une surface d'appui 19, et les moyens d'actionnement 16 comprennent un élément formant plan incliné 18 qui est adapté à venir en butée contre la surface d'appui 19 quand le levier 7 est en position escamotée et les moyens d'actionnement 16 sont en position d'actionnement.

Le plan incliné 18 et la surface d'appui 19 sont conformés de telle sorte que, quand les moyens d'actionnement 16 passent de leur position de repos à leur position d'actionnement, le plan incliné 18 vient en butée contre la surface d'appui 19 et impose au levier 7 un mouvement de pivotement autour de l'axe de rotation 8 vers sa position déployée. Le pivotement du levier 7 imposé par le plan incliné est tel que le point d'équilibre du mécanisme à genouillère est franchi, c'est à dire que l'arbre 13 traverse la droite d'équilibre. Une fois l'équilibre franchi, le ressort d'ouverture 10 sollicite le levier 7 vers sa position déployée et l'organe mobile formant pince 4 vers sa position ouverte.

Dans l'exemple illustré aux figures 1 à 3, les moyens d'actionnement 16 sont plus proche des organes formant pince 3,4 quand ils sont en position de repos que quand ils sont en position d'actionnement. De plus, le plan incliné 18 est disposé, par rapport à la direction longitudinale du corps de préhension 2, entre l'axe de rotation 8 et la surface d'appui 19 qui fait face à l'axe de rotation 8.

De plus, les moyens d'actionnement 16 comprennent un bouton d'activation 20 qui est adapté à être manoeuvré par l'utilisateur et qui fait saillie à la surface du dispositif de préhension amovible 1 opposée à celle à laquelle le levier 7 est fixé. L'organe mobile formant pince 4 présente une rainure 21 au travers de laquelle le bouton d'activation 20 est solidarisé au plan incliné 18 (le bouton d'activation 20 et le plan incliné 18 sont situés de part et d'autre de l'organe mobile formant pince 4) de sorte que le mouvement de l'organe mobile formant pince 4 ne soit pas gêné par les moyens d'actionnement 16, et réciproquement.

Quand l'utilisateur veut faire passer le levier 7 de sa position escamotée à sa position déployée afin de libérer le récipient des organes formant pince 3,4, il impose aux moyen d'activation 16, par l'intermédiaire du bouton d'activation 20, une translation jusqu'à leur position d'actionnement.

Le bouton d'activation 20 permet à l'utilisateur de manoeuvrer les moyens d'activation 16 sans avoir à changer de prise de main, et uniquement à l'aide du pouce. De plus, comme les moyens d'actionnement 16 sont plus proche des organes formant pince 3,4 quand ils sont en position de repos que quand ils sont en position d'actionnement, pour manoeuvrer les moyens d'activation 16, l'utilisateur doit tirer le bouton de commande 20 vers lui, et non pas le pousser vers le récipient, ce qui permet d'éviter toute ouverture par manoeuvre inopportune du bouton de commande.

Par ailleurs, dans l'exemple illustré aux figures 1 à 3, le levier 7 comprend un crochet 22, et les moyens d'actionnement 16 comprennent une patte 25 dans laquelle est réalisée un ouverture 23. Le crochet 22 est adapté à s'engager dans l'ouverture 23 quand le levier 7 est en position escamotée et les moyens d'actionnement 16 sont en position de repos. De ce fait, les moyens d'actionnement 16 se comportent aussi comme des moyens de verrouillage adaptés à verrouiller le levier 7 en position escamotée.

L'engagement du crochet 22 dans l'ouverture 23 se fait par encliquetage : quand le levier 7 est pivoté de sa position déployée vers sa position escamotée, une surface supérieure 24 du crochet 22 vient en butée contre la patté 25 et, de ce fait, les moyens d'actionnement 16 sont entraînés en translation en direction de leur position d'actionnement jusqu'à une position de libération dans laquelle le crochet 22 est au niveau de l'ouverture 23. A cette position de libération, le ressort de rappel 17 entraîne en translation les moyens d'actionnement 16 en direction de leur position de repos, réalisant l'encliquetage.

Les moyens d'actionnement permettent donc de verrouiller le levier 7 dans sa position escamotée, ce qui permet d'éviter toute ouverture intempestive due à une manipulation brusque du dispositif de préhension amovible 1 qui pourrait faire en sorte que, par l'à-coup, l'arbre 13 franchisse la droite d'équilibre.

Dans l'exemple illustré aux figures 1 à 3, le plan incliné 18 est solidaire de la patte 25 et le crochet 22 est solidaire de la surface d'appui 19. Le plan incliné 18, la surface d'appui 19, le crochet 22 et la patte 25 sont agencés de telle sorte que le crochet 22 est désengagé de l'ouverture 23 par translation des moyens d'actionnement 16 vers leur position d'actionnement avant que le plan incliné 18 vienne en butée contre la surface d'appui 19 : le crochet 22 est orienté dans la direction opposée de l'axe de rotation 8 et il est plus éloigné de cet axe de rotation 8 que ne l'est la surface d'appui 19. La patte 25 est située à la hauteur du crochet 22 quand le levier 7 est verrouillé par les moyens d'actionnement 16 et elle est inclinée de sorte que sa face faisant face à l'axe de rotation 8 forme un angle obtus avec la direction longitudinale du corps de préhension 2.

Ainsi, quand l'utilisateur veut faire passer le levier 7 de sa position escamotée à sa position déployée afin de libérer le récipient des organes formant pince 3,4, il impose aux moyens d'actionnement 16, par l'intermédiaire du bouton d'activation 20, une translation jusqu'à leur position d'actionnement. Lors de cette translation, les moyens de déverrouillage 16 passent par leur position de libération dans laquelle le crochet 22 n'est plus engagé dans l'ouverture 23. De ce fait, le levier 7 est déverrouillé avant que le plan incliné 18 vienne en butée contre la surface d'appui 19, ce qui permet au levier 7 de pivoter vers sa position escamotée et à l'organe mobile formant pince 4 de passer dans sa position ouverte.

Bien évidemment, la présente invention n'est pas limitée au mode de réalisation décrit de façon détaillée ci-dessus.

Il serait possible de réaliser un dispositif de préhension amovible ne comprenant pas de moyens de verrouillage, ou dont le moyen de transmission ne serait pas une bielle.

Il serait aussi possible que les moyens de déplacement ne soient pas adaptés à ajuster la distance séparant les deux organes formant pince en position fermée à l'épaisseur du récipient pincé.

## Revendications

1. Dispositif de préhension amovible (1) pour récipient, comprenant
- deux organes formant pince (3,4) montés sur un corps de préhension (2), l'un des organes formant pince (4) étant mobile en translation par rapport au corps de préhension (2), selon une direction sensiblement parallèle à la direction longitudinale du corps de préhension (2), entre une position ouverte et une position fermée dans laquelle les organes formant pince (3,4) sont adaptés à pincer un rebord du récipient,
- des moyens de déplacement (6) adaptés à déplacer les organes formant pince (3,4) l'un par rapport à l'autre, comportant un levier (7) monté mobile en rotation par rapport au corps de préhension (2) entre une position déployée et une positon escamotée dans laquelle l'organe mobile formant pince (4) est en position fermée, et un moyen de transmission (9) s'étendant entre le levier (7) et l'organe mobile formant pince (4) adapté à déplacer l'organe mobile formant pince (4) en translation quand le levier (7) est pivoté, et
- des moyens d'actionnement (16) du déploiement du levier (7),
**caractérisé en ce que** les moyens d'actionnement (16) sont distincts des moyens de déplacement (6) et sont montés en translation sur le corps de préhension (2) selon une direction sensiblement parallèle à la direction longitudinale du corps de préhension (2), entre une position de repos et une position d'actionnement dans laquelle les moyens d'actionnement (16) sont aptes à faire passer le levier (7) de sa position escamotée à sa position déployée, et **en ce que** les moyens de déplacement (6) sont conformés de sorte que le levier (7) est dans une position d'équilibre stable tant en position escamotée qu'en position déployée, et passe par une position intermédiaire d'équilibre instable quand il pivote de l'une à l'autre de ses deux positions d'équilibre stable.

2. Dispositif de préhension amovible (1) selon la revendication 1, **caractérisé en ce que** les moyens d'actionnement (16) sont sollicités en permanence vers leur position de repos par un moyen de rappel (17).

3. Dispositif de préhension amovible (1) selon la revendication 1 ou 2, **caractérisé en ce que** les moyens d'actionnement (16) sont plus proche des organes formant pince (3, 4) quand ils sont en position de repos que quand ils sont en position d'actionnement.

4. Dispositif de préhension amovible (1) selon l'une des revendications 1 à 3, **caractérisé en ce que** les moyens d'actionnement (16) comprennent un élément formant plan incliné (18) adapté, quand les moyens d'actionnement (16) sont en position d'actionnement, à venir en butée contre une surface d'appui (19) du levier (7), et à imposer au levier (7) un mouvement de rotation de la position escamotée jusqu'au franchissement de sa position d'équilibre instable.

5. Dispositif de préhension amovible (1) selon l'une des revendications 1 à 4, **caractérisé en ce que** les moyens d'actionnement (16) comprennent un bouton d'activation (20) qui est adapté à être manoeuvré manuellement pour permettre l'entraînement des moyens d'actionnement (16) et qui fait saillie à une surface du corps de préhension (2) opposée à celle par laquelle le levier (7) est fixé.

6. Dispositif de préhension amovible (1) selon les revendications 4 et 5, **caractérisé en ce que** l'organe mobile formant pince (4) présente une rainure (21) au travers de laquelle le bouton d'.activation (20) est solidarisé au plan incliné (18).

7. Dispositif de préhension amovible (1) selon l'une des revendications 1 à 6, **caractérisé en ce que** les moyens d'actionnement (16) en position de repos sont adaptés à empêcher tout pivotement du levier (7) de sa position escamotée jusqu'à sa position d'équilibre instable.

8. Dispositif de préhension amovible (1) selon la revendication 7, **caractérisé en ce que** les moyens d' actionnement (16) coopèrent avec le levier (7) par encliquetage pour le verrouiller dans sa position escamotée.

9. Dispositif de préhension amovible (1) selon la revendication 7 ou 8, **caractérisé en ce que** le levier (7) comprend un crochet (22) adapté à s' engager dans une ouverture (23) réalisée dans les moyens d'actionnement (16) quand le levier (7) est en position escamotée et les moyens d'actionnement (16) sont en position de repos, et à être désengagé de l'ouverture (23) par la translation des moyens d'actionnement (16) vers leur position d'actionnement avant l'actionnement du déploiement du levier (7).

10. Dispositif de préhension amovible (1) selon la revendication 9, **caractérisé en ce que** le crochet (22) comprend une surface supérieure (24) adaptée, quand le levier (7) est pivoté vers sa position escamotée, à entraîner les moyens d'actionnement (16) en direction de leur position d'actionnement jusqu'à une position permettant l'encliquetage du crochet (22) dans l'ouverture (23).

11. Dispositif de préhension amovible (1) selon l'une des revendications 1 à 10, **caractérisé en ce que** les moyens de déplacement (6) sont adaptés à ajuster la distance séparant les deux organes formant pince (3,4) en position fermée à l'épaisseur du récipient pincé.

12. Dispositif de préhension amovible (1) selon la revendication 11, **caractérisé en ce qu'**un ressort (15) adapté à agir sur l'organe mobile (4) de façon à permettre l'ajustement de la distance séparant les deux organes formant pince (3, 4), est logé dans le moyen de transmission (9).

13. Dispositif de préhension amovible (1) selon l'une des revendications 1 à 12, **caractérisé en ce que** les moyens de transmission (9) sont formées par une bielle (9) qui est monté mobile en rotation par rapport au levier (7) et par rapport à l'organe mobile formant pince (4).

14. Dispositif de préhension amovible (1) selon la revendication 13, **caractérisé en ce que** la bielle (9) est monté rotative sur le levier (7) par l'intermédiaire d'un arbre (13) qui est situé à proximité de l'extrémité du levier (7) opposée à l'extrémité par laquelle le levier (7) est relié au corps de préhension (2).

15. Dispositif de préhension amovible (1) selon l'une des revendications 1 à 14, **caractérisé en ce que** la longueur du levier (7) correspond à la largueur de trois doigts serrés les uns contre les autres.

16. Dispositif de préhension amovible (1) selon l'une des revendications 1 à 15, **caractérisé en ce que** les longueurs du levier (7) et du corps de préhension (2) sont telles qu'un utilisateur ayant en main le dispositif de préhension (1), a son index et son majeur disposés contre le levier (7) et son annulaire et son auriculaire disposés contre le corps de préhension (2).

## Patentansprüche

1. Abnehmbare Vorrichtung (1) zum Greifen eines Behälters, welche umfaßt:
- zwei eine Klemme bildende Bauteile (3, 4), die an einem Greifkörper (2) angeordnet sind, wobei eines der die Klemme bildenden Bauteile (4) bezüglich dem Greifkörper (2) längs einer Richtung, die im wesentlichen parallel zur Längsrichtung des Greifkörpers (2) ist, zwischen einer geöffneten Position und einer geschlossenen Position verschiebbar ist, in der die die Klemme bildenden Bauteile (3, 4) einen Rand des Behälters greifen können,
- eine Verlagerungseinrichtung (6), welche die die Klemme bildenden Bauteile (3, 4) zueinander verlagern kann und einen Hebel (7), der bezüglich des Greifkörpers (2) schwenkbar zwischen einer ausgefahrenen und einer eingefahrenen Stellung angebracht ist, in der das die Klemme bildende, verschiebbare Bauteil (4) in einer geschlossenen Position liegt, und eine Übertragungseinrichtung (9) umfaßt, die sich zwischen dem Hebel (7) und dem die Klemme bildenden, verschiebbaren Bauteil (4) erstreckt und das die Klemme bildende, verschiebbare Bauteil (4) verschieben kann, wenn der Hebel (7) geschwenkt wird, und
- eine Betätigungseinrichtung (16) zum Ausfahren des Hebels (7),
**dadurch gekennzeichnet, daß** die Betätigungseinrichtung (16) von der Verlagerungseinrichtung (6) getrennt ist und an dem Greifkörper (2) längs einer Richtung, die im wesentlichen parallel zur Längsrichtung des Greifkörpers (2) ist, zwischen einer Ruheposition und einer Betätigungsposition verschiebbar angebracht ist, in der die Betätigungseinrichtung (16) dazu ausgelegt ist, den Hebel (7) von dessen eingefahrener Stellung in dessen ausgefahrene Stellung gelangen zu lassen, und daß die Verlagerungseinrichtung (6) derart ausgeführt ist, daß der Hebel (7) sowohl in der ausgefahrenen Stellung als auch in der eingefahrenen Stellung in einer stabilen Gleichgewichtsposition liegt und eine instabile Zwischengleichgewichtsposition passiert, wenn er von der einen stabilen Gleichgewichtsposition in die andere stabile Gleichgewichtsposition schwenkt.

2. Vorrichtung nach Anspruch 1, **dadurch gekennzeichnet, daß** die Betätigungseinrichtung (16) in ihre Ruheposition durch eine Rückstelleinrichtung (17) gezwungen ist.

3. Vorrichtung nach Anspruch 1 oder 2, **dadurch gekennzeichnet, daß** die Betätigungseinrichtung (16) näher an den die Klemme bildenden Elementen (3, 4) liegt, wenn sie in der Ruheposition ist, als wenn sie in der Betätigungsposition ist.

4. Vorrichtung nach einem der Ansprüche 1 bis 3, **dadurch gekennzeichnet, daß** die Betätigungseinrichtung (16) ein Bauteil umfaßt, das eine schräge Ebene (18) formt, die dazu ausgelegt ist, dann, wenn die Betätigungseinrichtung (16) in der Betätigungsposition ist, gegen eine Abstützfläche (19) des Hebels (7) anzuschlagen und den Hebel (7) aus der eingefahrenen Stellung über die instabile Gleichgewichtsposition hinaus zu schwenken.

5. Vorrichtung nach einem der Ansprüche 1 bis 4, **dadurch gekennzeichnet, daß** die Betätigungseinrichtung (16) einen Betätigungsknopf (20) aufweist, der manuell bedienbar ist, um den Antrieb der Betätigungseinrichtung (16) zuzulassen, und welcher Betätigungsknopf (20) von einer Fläche des Greifkörpers (2) vorsteht, die derjenigen Fläche gegenüberliegt, an welcher der Hebel (7) befestigt ist.

6. Vorrichtung nach Anspruch 4 und 5, **dadurch gekennzeichnet, daß** das die Klemme bildende Bauteil (4) eine Nut (21) aufweist, durch die hindurch der Betätigungsknopf (20) mit der geneigten Ebene (18) verbunden ist.

7. Vorrichtung nach einem der Ansprüche 1 bis 6, **dadurch gekennzeichnet, daß** die Betätigungseinrichtung (16) in der Ruheposition dazu ausgelegt ist, jegliche Schwenkbewegung des Hebels (7) aus seiner eingefahrenen Stellung bis zu seiner instabilen Gleichgewichtsposition zu verhindern.

8. Vorrichtung nach Anspruch 7, **dadurch gekennzeichnet, daß** die Betätigungseinrichtung (16) mit dem Hebel (7) über einen Rastmechanismus zusammenwirkt, um den Hebel in dessen eingefahrener Stellung zu verriegeln.

9. Vorrichtung nach Anspruch 7 oder 8, **dadurch gekennzeichnet, daß** der Hebel (7) einen Haken (22) aufweist, der mit einer Öffnung (23) in Eingriff bringbar ist, die in der Betätigungseinrichtung (16) ausgebildet ist, wenn der Hebel (7) in der eingefahrenen Stellung ist und die Betätigungseinrichtung (16) in der Ruheposition ist, und welcher Haken von der Öffnung (23) durch die Verschiebung der Betätigungseinrichtung (16) in Richtung ihrer Betätigungsstellung befreibar ist, bevor der Hebel (7) ausgefahren wird.

10. Vorrichtung nach Anspruch 9, **dadurch gekennzeichnet, daß** der Haken (22) eine obere Fläche (24) aufweist, die, wenn der Hebel (7) in seine eingefahrene Position geschwenkt ist, die Betätigungseinrichtung (16) in Richtung ihrer Betätigungsstellung bis zu einer Stellung verbringen kann, in der das Einrasten des Hakens (22) in die Öffnung (23) zugelassen wird.

11. Vorrichtung nach einem der Ansprüche 1 bis 10, **dadurch gekennzeichnet, daß** die Verlagerungseinrichtung (6) den Abstand, der die beiden die Klemme bildenden Bauteile (3, 4) in der geschlossenen Position voneinander trennt, auf die Dicke des zu klemmenden Behälters einstellen kann.

12. Vorrichtung nach Anspruch 11, **dadurch gekennzeichnet, daß** eine Feder (15), die derart auf das bewegliche Bauteil (4) wirken kann, daß der Abstand eingestellt werden kann, der die beiden die Klemme bildenden Bauteile (3, 4) trennt, in der Übertragungseinrichtung (9) untergebracht ist.

13. Vorrichtung nach einem der Ansprüche 1 bis 12, **dadurch gekennzeichnet, daß** die Übertragungseinrichtung durch ein Zwischenglied (9) gebildet ist, das bezüglich des Hebels (7) und bezüglich des die Klemme bildenden, verschiebbaren Bauteils (4) drehbeweglich gelagert ist.

14. Vorrichtung nach Anspruch 13, **dadurch gekennzeichnet, daß** das Zwischenglied (9) an dem Hebel (7) mittels einer Welle (13) drehbeweglich gelagert ist, die in der Nähe des Endes des Hebels (7) angeordnet ist, das dem Ende gegenüberliegt, an welchem der Hebel (7) mit dem Greifkörper (2) verbunden ist.

15. Vorrichtung nach einem der Ansprüche 1 bis 14, **dadurch gekennzeichnet, daß** die Länge des Hebels (7) der Breite von drei Fingern entspricht, die kompakt aneinanderliegen.

16. Vorrichtung nach einem der Ansprüche 1 bis 15, **dadurch gekennzeichnet, daß** die Länge des Hebels (7) und des Greifkörpers (2) derart ausgelegt ist, daß ein die Greifvorrichtung (1) haltender Benutzer seinen Zeigefinger und seinen Daumen an den Hebel (7) sowie seinen Ringfinger und seinen kleinen Finger an den Greifkörper (2) legen kann.

## Claims

1. Removable gripping device (1) for a container, comprising
- two clamp-forming members (3, 4) mounted on a gripping body (2), one of the clamp-forming members (4) being able to move translationally with respect to the gripping body (2) in a direction substantially parallel to the longitudinal direction of the gripping body (2), between an open position and a closed position in which the clamp-forming members (3, 4) are designed to clamp a rim of the container,
- movement means (6) designed to move the clamp-forming members (3, 4) relative to one another, comprising a lever (7) mounted so that it is able to rotate with respect to the gripping body (2) between a deployed position and a retracted position in which the moving clamp-forming member (4) is in the closed position, and a transmission means (9) extending between the lever (7) and the moving clamp-forming member (4) and designed to move the moving clamp-forming member (4) translationally when the lever (7) is pivoted, and
- actuating means (16) for deploying the lever (7),
**characterized in that** the actuating means (16) are separate from the movement means (6) and are mounted translationally on the gripping body (2) in a direction substantially parallel to the longitudinal direction of the gripping body (2), between a rest position and an actuating position in which the actuating means (16) are able to switch the lever (7) from its retracted position to its deployed position, and **in that** the movement means (6) are configured so that the lever (7) is in a stable equilibrium position both in the retracted position and in the deployed position and passes through an intermediate unstable equilibrium position when it pivots from one of its two stable equilibrium positions to the other.

2. Removable gripping device (1) according to Claim 1, **characterized in that** the actuating means (16) are permanently urged towards their rest position by a return means (17).

3. Removable gripping device (1) according to Claim 1 or 2, **characterized in that** the actuating means (16) are closer to the clamp-forming members (3, 4) when they are in the rest position than when they are in the actuating position.

4. Removable gripping device (1) according to one of Claims 1 to 3, **characterized in that** the actuating means (16) comprise an element forming an inclined plane (18) designed, when the actuating means (16) are in the actuating position, to butt against a bearing surface (19) of the lever (7) and to cause the lever (7) to perform a rotational movement from the retracted position until it overcomes its unstable equilibrium position.

5. Removable gripping device (1) according to one of Claims 1 to 4, **characterized in that** the actuating means (16) comprise an activation button (20) which is designed to be operated manually so as to allow the actuating means (16) to be driven and which projects at a surface of the gripping body (2) which is directed away from that via which the lever (7) is fastened.

6. Removable gripping device (1) according to Claims 4 and 5, **characterized in that** the moving clamp-forming member (4) has a slot (21) across which the activation button (20) is secured to the inclined plane (18).

7. Removable gripping device (1) according to one of Claims 1 to 6, **characterized in that** the actuating means (16) in the rest position are designed to prevent any pivoting of the lever (7) from its retracted position to its unstable equilibrium position.

8. Removable gripping device (1) according to Claim 7, **characterized in that** the actuating means (16) cooperate with the lever (7) by snap-fastening so as to lock it in its retracted position.

9. Removable gripping device (1) according to Claim 7 or 8, **characterized in that** the lever (7) comprises a hook (22) designed to engage in an opening (23) made in the actuating means (16) when the lever (7) is in the retracted position and the actuating means (16) are in the rest position, and to be disengaged from the opening (23) by the translational movement of the actuating means (16) towards their actuating position before actuating the lever (7) to deploy it.

10. Removable gripping device (1) according to Claim 9, **characterized in that** the hook (22) comprises an upper surface (24) designed, when the lever (7) is pivoted towards its retracted position, to drive the actuating means (16) in the direction of their actuating position until reaching a position allowing the hook (22) to be snap-fastened into the opening (23).

11. Removable gripping device (1) according to one of Claims 1 to 10, **characterized in that** the movement means (6) are designed to adjust the distance separating the two clamp-forming members (3, 4) in the closed position to the thickness of the clamped container.

12. Removable gripping device (1) according to Claim 11, **characterized in that** a spring (15) designed to act on the moving member (4) so as to allow adjustment of the distance separating the two clamp-forming members (3, 4) is housed in the transmission means (9).

13. Removable gripping device (1) according to one of Claims 1 to 12, **characterized in that** the transmission means (9) are formed by a link (9) which is mounted so that it can rotate with respect to the lever (7) and with respect to the moving clamp-forming member (4).

14. Removable gripping device (1) according to Claim 13, **characterized in that** the link (9) is mounted rotatably on the lever (7) by way of a shaft (13) which is situated in the vicinity of that end of the lever (7) directed away from the end via which the lever (7) is connected to the gripping body (2).

15. Removable gripping device (1) according to one of Claims 1 to 14, **characterized in that** the length of the lever (7) corresponds to the width of three fingers clenched against one another.

16. Removable gripping device (1) according to one of Claims 1 to 15, **characterized in that** the lengths of the lever (7) and of the gripping body (2) are such that a user having the gripping device (1) in his hand has his index finger and his middle finger placed against the lever (7) and his ring finger and his little finger placed against the gripping body (2).
